# EUROPEAN PATENT APPLICATION

(11) **EP 2 402 378 A1**
(43) Date of publication of application: **04.01.2012**
(21) Application number: 10746121.2
(22) Date of filing: 17.02.2010
(51) Int. Cl.: C08G 8/34, C09D 11/02

(54) **ROSIN-MODIFIED PHENOL RESIN, MANUFACTURING METHOD THEREOF, AND PRINTING INK**

(30) Priority: 27.02.2009 JP 2009045109
(71) Applicant: Arakawa Chemical Industries, Ltd., Osaka-shi Osaka 541-0046 (JP)
(72) Inventor: KAWASE, Shigeru, Osaka-shi Osaka 538-0053 (JP); HAKATA, Hirokazu, Osaka-shi Osaka 538-0053 (JP)
(74) Representative: Hannke, Christian
(86) International application number: PCT/JP2010/052367
(87) International publication number: WO 2010/098240

(57) **Abstract**

A rosin-modified phenolic resin, comprising a product obtained by reaction of (a) a rosin material containing 0.4 to 10% of dihydroagathic acid, (b) a condensate of a phenolic compound and formaldehyde, and (c) a polyol.

The rosin-modified phenol resin is suitable for printing ink applications, and the amount of printing ink mist can reduced without the luster of the printed materials being diminished while maintaining various ink capabilities (dryng properties, emulsifying properties, etc.).

## Description

### TECHNICAL FIELD

The invention relates to a rosin-modified phenolic resin, a method for production thereof, and a printing ink composition.

### BACKGROUND ART

In recent years, the increase in the speed of printing machines has caused a problem in which a large amount of ink mist is scattered from printing machines to degrade the working environment during printing operations. Methods of reducing such a problem include a method of imparting electrical conductivity by making ink resin highly polar and a method of increasing the elasticity of ink by increasing the molecular weight. Generally, however, such methods tend to reduce gloss, although they can reduce the amount of mist.

A proposed method for solving such a problem includes using a petroleum resin composition for printing ink, but in such a method, the petroleum resin alone hardly provides a satisfactory level of various ink performances (see Patent Document 1). There is also a proposal in which a rosin-modified phenolic resin having a weight average molecular weight of 30,000 to 250,000 which is produced with a C10-C20 alkyl phenol and an acid catalyst should be used as a printing ink resin, but the resin, which hardly provides a satisfactory level of various ink performances, is less versatile (see Patent Document 2). There is also proposed a method of reducing the amount of mist and improving gloss by reducing the content of low-molecular-weight components in a rosin-modified phenolic resin, but a further improvement has been demanded (see Patent Document 3).

### PRIOR ART DOCUMENTS

### Patent Documents

Patent Document 1: Japanese Patent Application Laid-Open (JP-A) No. 07-33951
Patent Document 2: JP-A No. 08-283641
Patent Document 3: JP-A No. 2007-238795

### SUMMARY OF THE INVENTION

### Objects to be Achieved by the Invention

An object of the invention is to provide a rosin-modified phenolic resin that makes it possible to reduce the amount of printing ink mist with maintaining various ink performances (such as drying properties and emulsifying properties) and without reducing the gloss of prints, and to provide a method for production thereof and a printing ink composition containing such a rosin-modified phenolic resin.

### Means for Solving the Problems

In order to solve the problems, the inventors have focused attention on resin acid components in rosin materials used to form rosin-modified phenolic resins and made a study on such resin acid components. As a result, the inventors have accomplished the invention based on the finding that the problems can be solved by setting the dihydroagathic acid content of rosin materials at specific values.

That is, the invention is related to a rosin-modified phenolic resin, comprising a product obtained by reaction of (a) a rosin material containing 0.4 to 10% of dihydroagathic acid, (b) a condensate of a phenolic compound and formaldehyde, and (c) a polyol.
And also, the invention is related to a method for producing a rosin-modified phenolic resin, comprising allowing (a) a rosin material containing 0.4 to 10% of dihydroagathic acid, (b) a condensate of a phenolic compound and formaldehyde, and (c) a polyol to react together.
And further, the invention is related to a printing ink composition comprising the rosin-modified phenolic resin.

### Effects of the Invention

According to the invention, printing ink resins can be provided, which make it possible to reduce the amount of printing ink mist with maintaining various ink performances (such as drying properties and emulsifying properties) and without reducing the gloss of prints. The printing ink resin according to the invention is particularly suitable for use in offset printing ink such as offset sheet-fed printing ink (sheet-fed printing ink), rotary offset printing ink (offset rotary ink), or newspaper ink, as well as in relief printing ink or gravure printing ink.

### EMBODIMENTS FOR CARRYING OUT THE INVENTION

The rosin-modified phenolic resin of the invention includes a product obtained by reaction of a rosin material containing 0.4 to 10% of dihydroagathic acid (hereinafter referred to as the component (a)), a condensate of a phenolic compound and formaldehyde (hereinafter referred to as the component (b)), and a polyol (hereinafter referred to as the component (c)) as essential components.

The component (a) for use in an embodiment of the invention may be any known rosin material containing 0.4 to 10% of dihydroagathic acid. If the content of dihydroagathic acid is more than 10%, the rosin-modified phenolic resin may have a higher molecular weight to form an insoluble material. If it is less than 0.4%, the resin may be more likely to cause misting. The content of dihydroagathic acid is preferably from 3 to 10%, more preferably from 3 to 9%. The content of dihydroagathic acid may be determined from the peak area ratio in gas chromatography (GC). Specifically, the content may be determined from the ratio (%) of the peak area to the total resin acid peak area (100%).

Dihydroagathic acid is a dicarboxylic acid, which is generally often contained in Indonesian gum rosin or Vietnamese gum rosin. Therefore, such gum rosin may be used as it is. However, Chinese gum rosin often does not contain dihydroagathic acid. Therefore, when gum rosin with a low dihydroagathic acid content is used, it is necessary to control the dihydroagathic acid content by addition of dihydroagathic acid, for example, which is isolated by the method disclosed in JP-A No. 51-131899.

Examples of the component (a) which may be used include natural rosin such as gum rosin, tall oil rosin, or wood rosin; polymerized rosin derived from the natural rosin; stabilized rosin obtained by disproportionation or hydrogenation of natural rosin or polymerized rosin; and a product prepared by adding dihydroagathic acid so that its content can fall within the above range, to an unsaturated acid-modified rosin material, which is obtained by adding an unsaturated carboxylic acid to natural rosin or polymerized rosin, in which rosin with a dihydroagathic acid content in the above range may be used as a raw material for various rosin derivatives such as polymerized rosin, stabilized rosin, and unsaturated acid-modified rosin. Examples of the unsaturated acid-modified rosin material include maleic acid-modified rosin, maleic anhydride-modified rosin, fumaric acid-modified rosin, acrylic acid-modified rosin, methacrylic acid-modified rosin, and acid-modified polymerized rosin corresponding thereto. The unsaturated acid-modified rosin material includes a product obtained by modifying 100 parts by weight of raw rosin with generally about 1 to about 30 parts by weight of an unsaturated carboxylic acid. Any of these materials may be used singly or in combination as the component (a). When two or more materials are used in combination, the total content of dihydroagathic acid in all materials used as the component (a) may be in the range specified according to the invention.

The component (b) to be used may be any of various known condensates such as a condensate produced by addition-condensation reaction of a phenolic compound (P) with formaldehyde (F) in a F/P ratio (molar ratio) generally in the range of about 1 to about 3 in the presence of an alkali catalyst such as sodium hydroxide, potassium hydroxide, or calcium hydroxide (resol type phenolic resin); and a condensate produced by addition-condensation reaction of a phenolic compound (P) with formaldehyde (F) in a F/P ratio (molar ratio) generally in the range of about 0.5 to about 2 in the presence of an acid catalyst such as oxalic acid, sulfuric acid, hydrochloric acid, or p-toluenesulfonic acid (novolac type phenolic resin). If necessary, the above condensate may be neutralized and washed with water, and the resulting product may be used as the component (b). Examples of a phenolic compound include carbolic acid (phenol), cresol, amyl phenol, bisphenol A, butyl phenol, octyl phenol, nonyl phenyl, dodecyl phenol, etc. Formalin, paraformaldehyde or the like may be used as the formaldehyde. A resol type phenolic resin is preferably used as the component (b), because the use of it can increase the molecular weight of the rosin-modified phenolic resin.

The component (c) to be used may be any known compound having at least two hydroxyl groups per molecule. Examples of the component (c) include dipentaerythritol, pentaerythritol, diglycerin, glycerin, ditrimethylolpropane, trimethylolpropane, ditrimethylolethane, triethylene glycol, diethylene glycol, ethylene glycol, and neopentyl glycol. Examples of the component (c), which are preferably used in an embodiment of invention because of easiness of control of the softening point or molecular weight of the rosin-modified phenolic resin, include trihydric alcohols whose longest carbon chain has at most 4 carbon atoms in the molecule, such as glycerin, trimethylolpropane, and trimethylolethane; and tetrahydric alcohols whose longest carbon chain has at most 4 carbon atoms in the molecule, such as pentaerythritol, diglycerin, ditrimethylolpropane, and ditrimethylolethane.

The amounts of the components (a), (b), and (c) used to form the rosin-modified phenolic resin of the invention are not restricted and may each be determined depending on the intended use. Based on 100% by weight of the total of the components (a), (b) and (c) used, the amount of the component (a) used is generally from about 41 to about 88% by weight, preferably from about 46 to about 74% by weight, the amount of the component (b) used (on solid basis) is generally from about 9 to about 50% by weight, preferably from about 22 to about 46% by weight, and the amount of the component (c) used is generally from about 3 to about 9% by weight, preferably from about 4 to about 8% by weight. Within the value ranges, the balance between various properties for ink, such as anti-misting properties, drying properties, and gloss can be kept at a proper level, which is preferred. Furtheremore, in order to allow the rosin-modified phenolic resin to have the desired molecular weight and to impart proper emulsifying properties to printing ink, the amount of the component (c) used is preferably controlled so that the ratio (OH/COOH) of the total hydroxyl equivalent (OH) to the total carboxyl equivalent (COOH) in the rosin-modified phenolic resin can be usually from about 0.5 to about 1.5.

The rosin-modified phenolic resin of the invention may be produced using any known, conventional method of producing rosin-modified phenolic resin. The conditions of the reaction, such as catalyst and reaction temperature are not restricted. For example, specific amounts of the components (a), (b), and (c) may be added to a reactor, respectively, and allowed to react at a temperature in the range of about 100 to about 300°C for about 1 to about 24 hours optionally in the presence of any of various known acidic or basic catalysts. Such catalysts include mineral acids such as hydrochloric acid and sulfuric acid, sulfonic acids such as methanesulfonic acid, p-toluenesulfonic acid, and dodecylbenzenesulfonic acid, metal oxides such as zinc oxide, magnesium oxide, and calcium oxide, metal hydroxides such as magnesium hydroxide and calcium hydroxide, and acetates such as calcium acetate, magnesium acetate, and zinc acetate.

The resin may also be produced by a method including allowing the component (a) to react with the component (b) and then adding the component (c) to the resulting reaction product to allow it to react or by a method including allowing the component (a) to react with the component (c) and then adding the component (b) to the resulting reaction product to allow it to react.

The rosin-modified phenolic resin of the invention obtained by the above method is characterized by having a high molecular weight and a high softening point. The rosin-modified phenolic resin of the invention may have a weight average molecular weight (a polystyrene equivalent value as measured by gel permeation chromatography method) in the range of 3,000 to 400,000. The weight average molecular weight is preferably 50,000 or more, more preferably 80,000 or more, even more preferably 100,000 or more. If the weight average molecular weight is less than 3,000, the amount of ink mist may tend to be large. On the other hand, the weight average molecular weight is preferably 400,000 or less, more preferably 300,000 or less. If the weight average molecular weight is more than 400,000, an insoluble material may be more likely to be formed in the resin, or the resin may tend to increase elasticity during the production of gel varnish so that the product may tend to be difficult to remove from the reaction vessel. The weight average molecular weight is preferably from 50,000 to 400,000, more preferably from 50,000 to 300,000, even more preferably from 80,000 to 300,000, still more preferably 100,000. The softening point is preferably from about 140 to about 200°C. Setting the softening point at 140°C or higher makes it possible to keep the drying properties of prints at a proper level, and setting the softening point at 200°C or lower makes it possible to increase the affinity for ink varnish and to maintain sufficient solubility.

A varnish for printing ink can be produced by adding a vegetable oil material and optionally a petroleum solvent for ink and any other material to the rosin-modified phenolic resin obtained as described above and mixing them together.

Any known conventional vegetable oil material may be used, examples of which include vegetable oils such as linseed oil, tung oil, safflower oil, dehydrated castor oil, and soybean oil; and monoesters of the vegetable oils, such as linseed oil fatty acid methyl esters, soybean oil fatty acid methyl esters, linseed oil fatty acid ethyl esters, soybean oil fatty acid ethyl esters, linseed oil fatty acid propyl esters, soybean oil fatty acid propyl esters, linseed oil fatty acid butyl esters, and soybean oil fatty acid butyl esters. These may be used alone or in combination of two or more as needed. In particular, vegetable oils having an unsaturated bond in the molecule are preferred in view of the drying properties of prints.

Any known conventional petroleum solvent for ink may be used, examples of which include petroleum solvents manufactured by Nippon Oil Corporation, such as No. 0 Solvent, No. 4 Solvent, No. 5 Solvent, No. 6 Solvent, No. 7 Solvent, AF Solvent No. 4, AF Solvent No. 5, AF Solvent No. 6, and AF Solvent No. 7. These may be used alone or in combination of two or more as needed. Particularly in view of environment countermeasure, AF Solvent having a boiling point of 200° or higher and an aromatic hydrocarbon content of 1% by weight or less is preferably used.

The varnish for printing ink may be produced by mixing and stirring the above components. In the mixing and stirring, the components may be heated to about 100 to about 240°C, preferably about 100 to about 200°C, so that the components can be dissolved and mixed, and if necessary, an additive may be added, so that the varnish for printing ink can be obtained. Examples of the additive include a gelling agent for imparting elasticity, an antioxidant, etc.

The gelling agent may be any of various known gelling agents such as aluminum octoate, aluminum stearate, aluminum triisopropoxide, aluminum tributoxide, aluminum dipropoxide monoacetylacetate, aluminum dibutoxide monoacetylacetate, and aluminum triacetylacetate.

The printing ink composition of the invention can be prepared by adding a pigment (yellow, rouge, cyan, black), the varnish for printing ink, and optionally any of various known additives and mixing them using a known ink manufacturing apparatus such as a roll mill, a ball mill, an attritor, or a sand mill so that the proper ink properties can be achieved. Examples of additives include surfactants, waxes and other materials for improving ink fluidity or ink surface coating.

### EXAMPLES

Hereinafter, the invention is more specifically described with reference to Production Examples and Examples, which however are not intended to limit the scope of the invention. Hereinafter, the term "parts" means parts by weight unless otherwise specified. The content of dihydroagathic acid was determined using gas chromatography (GC-14A, manufactured by Shimadzu Corporation).

### Production Example 1 (Production of Alkyl PhenolFormaldehyde Condensate)

To a reaction vessel equipped with a stirrer, a reflux condenser having a water separator, and a thermometer were added 1,000 parts of octyl phenol, 317 parts of 92% paraformaldehyde, 564 parts of xylene, and 500 parts of water and heated to 50°C under stirring. Subsequently, 89 parts of a 45% sodium hydroxide solution was added to the reaction vessel, and the reaction system was gradually allowed to heat up to 90°C under cooling.
The temperature was then maintained for 2 hours, and sulfuric acid was added dropwise thereto so that the pH was adjusted to about 6. Subsequently, the water layer fraction containing formaldehyde and so on was removed, and after washing with water was performed again, the contents were cooled, so that a xylene solution of 70% by weight of resol type octyl phenol was obtained.

### Production Example 2 (Production of Alkyl PhenolFormaldehyde Condensate)

To a reaction vessel equipped with a stirrer, a reflux condenser having a water separator, and a thermometer were added 800 parts of octyl phenol, 200 parts of butyl phenol, 340 parts of 92% paraformaldehyde, 573 parts of xylene, and 500 parts of water and heated to 50°C under stirring. Subsequently, 89 parts of a 45% sodium hydroxide solution was added to the reaction vessel, and the reaction system was gradually allowed to heat up to 90°C under cooling. The temperature was then maintained for 2 hours, and sulfuric acid was added dropwise thereto so that the pH was adjusted to about 6. Subsequently, the water layer fraction containing formaldehyde and so on was removed, and after washing with water was performed again, the contents were cooled, so that a xylene solution of 70% by weight of resol type octyl/butyl phenol was obtained.

### Example 1 (Example A of Production of Rosin-Modified Phenolic Resin)

To a reaction vessel equipped with a stirrer, a reflux condenser having a water separator, and a thermometer was added 1,000 parts of Indonesian gum rosin (the component (a) containing 8% of dihydroagathic acid) and melted by heating to 180°C with stirring under a nitrogen atmosphere. Subsequently, 93 parts of pentaerythritol and 3 parts of magnesium hydroxide were added thereto, and the mixture was heated to 280°C under stirring and allowed to react until an acid value of 25 mgKOH/g or less was reached. After the mixture was cooled to 230°C, 714 parts (500 parts in solid content) of the xylene solution of 70% by weight of resol type octyl phenol of Production Example 1 was added dropwise to the system over 9 hours at a temperature in the range of 230 to 260°C. After the dropwise addition was completed, the reaction was controlled so that the 33% by weight linseed oil viscosity could be 10 Pa·s. The contents were taken out after a reduced pressure of 0.02 MPa was applied for 10 minutes. The resulting rosin-modified phenolic resin had an acid value of 22.6 mgKOH/g, a softening point of 176°C, and a weight average molecular weight of 107,000. The 33% by weight linseed oil viscosity refers to the viscosity of a product obtained by heating and mixing the resin and linseed oil (1:2 in weight ratio), which was measured at 25°C using a cone-and-plate type viscometer manufactured by Nippon Rheology Equipment Inc. (hereinafter the same applies). The acid value and the softening point were measured according to JIS K 5601 (hereinafter the same applies). The weight average molecular weight is a polystyrene-equivalent molecular weight, which was measured by gel permeation chromatography (HLC-8120GPC, manufactured by TOSOH CORPORATION) using a THF solvent and TSK-GEL column manufactured by TOSOH CORPORATION (hereinafter the same applies).

### Example 2 (Example B of Production of Rosin-Modified Phenolic Resin)

To the same reaction vessel as in Example 1 were added 500 parts of Indonesian gum rosin (containing 8% of dihydroagathic acid) and 500 parts of Chinese gum rosin (containing 0% of dihydroagathic acid) (the rosin mixture as the component (a) contains 4% of dihydroagathic acid) and melted by heating to 180°C with stirring under a nitrogen atmosphere. Subsequently, 93 parts of pentaerythritol and 3 parts of magnesium hydroxide were added thereto, and the mixture was heated to 280°C under stirring and allowed to react until an acid value of 25 mgKOH/g or less was reached. After the mixture was cooled to 230°C, 714 parts (500 parts in solid content) of the xylene solution of 70% by weight of resol type octyl phenol of Production Example 1 was added dropwise to the system over 9 hours at a temperature in the range of 230 to 260°C. After the dropwise addition was completed, the reaction was controlled so that the 33% by weight linseed oil viscosity could be 10 Pa·s. The contents were taken out after a reduced pressure of 0.02 MPa was applied for 10 minutes. The resulting rosin-modified phenolic resin had an acid value of 20.2 mgKOH/g, a softening point of 176°C, and a weight average molecular weight of 95,000.

### Example 3 (Example C of Production of Rosin-Modified Phenolic Resin)

To the same reaction vessel as in Example 1 were added 70 parts of Indonesian gum rosin (containing 7.1% of dihydroagathic acid) and 930 parts of Chinese gum rosin (containing 0% of dihydroagathic acid) (the rosin mixture as the component (a) contains 0.5% of dihydroagathic acid) and melted by heating to 180°C with stirring under a nitrogen atmosphere. Subsequently, 93 parts of pentaerythritol and 3 parts of magnesium hydroxide were added thereto, and the mixture was heated to 280°C under stirring and allowed to react until an acid value of 25 mgKOH/g or less was reached. After the mixture was cooled to 230°C, 714 parts (500 parts in solid content) of the xylene solution of 70% by weight of resol type octyl phenol of Production Example 1 was added dropwise to the system over 9 hours at a temperature in the range of 230 to 260°C. After the dropwise addition was completed, the reaction was controlled so that the 33% by weight linseed oil viscosity could be 10 Pa·s. The contents were taken out after a reduced pressure of 0.02 MPa was applied for 10 minutes. The resulting rosin-modified phenolic resin had an acid value of 19.8 mgKOH/g, a softening point of 175°C, and a weight average molecular weight of 87,000.

### Example 4 (Example D of Production of Rosin-Modified Phenolic Resin)

To the same reaction vessel as in Example 1 were added 970 parts of Chinese gum rosin (containing 0% of dihydroagathic acid) and 30 parts of dihydroagathic acid (the rosin mixture as the component (a) contains 3% of dihydroagathic acid) and melted by heating to 180°C with stirring under a nitrogen atmosphere. Subsequently, 93 parts of pentaerythritol and 3 parts of magnesium hydroxide were added thereto, and the mixture was heated to 280°C under stirring and allowed to react until an acid value of 25 mgKOH/g or less was reached. After the mixture was cooled to 230°C, 714 parts (500 parts in solid content) of the xylene solution of 70% by weight of resol type octyl phenol of Production Example 1 was added dropwise to the system over 9 hours at a temperature in the range of 230 to 260°C. After the dropwise addition was completed, the reaction was controlled so that the 33% by weight linseed oil viscosity could be 10 Pa·s. The contents were taken out after a reduced pressure of 0.02 MPa was applied for 10 minutes. The resulting rosin-modified phenolic resin had an acid value of 20.8 mgKOH/g, a softening point of 177°C, and a weight average molecular weight of 101,000.

### Example 5 (Example E of Production of Rosin-Modified Phenolic Resin)

To the same reaction vessel as in Example 1 were added 969 parts of Indonesian gum rosin (containing 7.1% of dihydroagathic acid) and 31 parts of dihydroagathic acid (the rosin mixture as the component (a) contains 10% of dihydroagathic acid) and melted by heating to 180°C with stirring under a nitrogen atmosphere. Subsequently, 93 parts of pentaerythritol and 3 parts of magnesium hydroxide were added thereto, and the mixture was heated to 280°C under stirring and allowed to react until an acid value of 25 mgKOH/g or less was reached. After the mixture was cooled to 230°C, 714 parts (500 parts in solid content) of the xylene solution of 70% by weight of resol type octyl phenol of Production Example 1 was added dropwise to the system over 9 hours at a temperature in the range of 230 to 260°C. After the dropwise addition was completed, the reaction was controlled so that the 33% by weight linseed oil viscosity could be 10 Pa·s. The contents were taken out after a reduced pressure of 0.02 MPa was applied for 10 minutes. The resulting rosin-modified phenolic resin had an acid value of 23.3 mgKOH/g, a softening point of 178°C, and a weight average molecular weight of 139,000.

### Example 6 (Example F of Production of Rosin-Modified Phenolic Resin)

To the same reaction vessel as in Example 1 were added 500 parts of Indonesian gum rosin (containing 8% of dihydroagathic acid) and 500 parts of Chinese gum rosin (containing 0% of dihydroagathic acid) (the rosin mixture as the component (a) contains 4% of dihydroagathic acid) and melted by heating to 180°C with stirring under a nitrogen atmosphere. Subsequently, 84 parts of glycerin and 8 parts of zinc oxide were added thereto, and the mixture was heated to 270°C under stirring and allowed to react until an acid value of 25 mgKOH/g or less was reached. After the mixture was cooled to 230°C, 714 parts (500 parts in solid content) of the xylene solution of 70% by weight of resol type octyl/butyl phenol of Production Example 2 was added dropwise to the system over 9 hours at a temperature in the range of 230 to 260°C. After the dropwise addition was completed, the reaction was controlled so that the 33% by weight linseed oil viscosity could be 10 Pa·s. The contents were taken out after a reduced pressure of 0.02 MPa was applied for 10 minutes. The resulting rosin-modified phenolic resin had an acid value of 21.8 mgKOH/g, a softening point of 181°C, and a weight average molecular weight of 47,000.

### Example 7 (Example G of Production of Rosin-Modified Phenolic Resin)

To the same reaction vessel as in Example 1 were added 500 parts of Indonesian gum rosin (containing 8% of dihydroagathic acid) and 500 parts of Chinese gum rosin (containing 0% of dihydroagathic acid) (the rosin mixture as the component (a) contains 4% of dihydroagathic acid) and melted by heating to 180°C with stirring under a nitrogen atmosphere. Subsequently, 84 parts of glycerin and 7 parts of zinc oxide were added thereto, and the mixture was heated to 270°C under stirring and allowed to react until an acid value of 25 mgKOH/g or less was reached. After the mixture was cooled to 230°C, 714 parts (500 parts in solid content) of the xylene solution of 70% by weight of resol type octyl/butyl phenol of Production Example 2 was added dropwise to the system over 9 hours at a temperature in the range of 230 to 260°C. After the dropwise addition was completed, the reaction was controlled so that the 33% by weight linseed oil viscosity could be 10 Pa·s. The contents were taken out after a reduced pressure of 0.02 MPa was applied for 10 minutes. The resulting rosin-modified phenolic resin had an acid value of 21.5 mgKOH/g, a softening point of 181°C, and a weight average molecular weight of 51,000.

### Example 8 (Example H of Production of Rosin-Modified Phenolic Resin)

To the same reaction vessel as in Example 1 were added 500 parts of Indonesian gum rosin (containing 8% of dihydroagathic acid) and 500 parts of Chinese gum rosin (containing 0% of dihydroagathic acid) (the rosin mixture as the component (a) contains 4% of dihydroagathic acid) and melted by heating to 180°C with stirring under a nitrogen atmosphere. Subsequently, 103 parts of pentaerythritol was added thereto, and the mixture was heated to 250°C under stirring, and the temperature was held for 1 hour. After the temperature holding, 2 parts of triphenyl phosphite was added, and the mixture was heated to 280°C and allowed to react until an acid value of 25 mgKOH/g or less was reached. After the mixture was cooled to 230°C, 714 parts (500 parts in solid content) of the xylene solution of 70% by weight of resol type octyl phenol of Production Example 1 was added dropwise to the system over 9 hours at a temperature in the range of 240 to 270°C. After the dropwise addition was completed, the reaction was controlled so that the 33% by weight linseed oil viscosity could be 10 Pa_{·}s. The contents were taken out after a reduced pressure of 0.02 MPa was applied for 10 minutes. The resulting rosin-modified phenolic resin had an acid value of 19.4 mgKOH/g, a softening point of 178°C, and a weight average molecular weight of 299,000.

### Example 9 (Example I of Production of Rosin-Modified Phenolic Resin)

To the same reaction vessel as in Example 1 were added 500 parts of Indonesian gum rosin (containing 8% of dihydroagathic acid) and 500 parts of Chinese gum rosin (containing 0% of dihydroagathic acid) (the rosin mixture as the component (a) contains 4% of dihydroagathic acid) and melted by heating to 180°C with stirring under a nitrogen atmosphere. Subsequently, 103 parts of pentaerythritol were added thereto, and the mixture was heated to 250°C under stirring and the temperature was held for 1 hour. After the temperature holding, 3 parts of triphenyl phosphite was added, and the mixture was heated to 280°C and allowed to react until an acid value of 25 mgKOH/g or less was reached. After the mixture was cooled to 230°C, 714 parts (500 parts in solid content) of the xylene solution of 70% by weight of resol type octyl phenol of Production Example 1 was added dropwise to the system over 9 hours at a temperature in the range of 240 to 270°C. After the dropwise addition was completed, the reaction was controlled so that the 33% by weight linseed oil viscosity could be 10 Pa·s. The contents were taken out after a reduced pressure of 0.02 MPa was applied for 10 minutes. The resulting rosin-modified phenolic resin had an acid value of 17.1 mgKOH/g, a softening point of 178°C, and a weight average molecular weight of 305,000.

### Comparative Example 1

A rosin-modified phenolic resin was prepared as in Example 1, except that Indonesian gum rosin was replaced with dihydroagathic acid-free Chinese gum rosin (the component (a) contains 0% of dihydroagathic acid). The resulting rosin-modified phenolic resin had a viscosity of 6 Pa·s, which did not reach the desired viscosity, an acid value of 19.5 mgKOH/g, a softening point of 168°C, and a weight average molecular weight of 48,000.

### Comparative Example 2

A rosin-modified phenolic resin was prepared as in Example 3, except that the rosin mixture was replaced with a mixture of 40 parts of Indonesian gum rosin (containing 8% of dihydroagathic acid) and 960 parts of Chinese gum rosin (containing 0% of dihydroagathic acid) (the resulting rosin mixture as the component (a) contains 0.3% of dihydroagathic acid). The resulting rosin-modified phenolic resin had an acid value of 20.0 mgKOH/g, a softening point of 175°C, and a weight average molecular weight of 79,000.

### Comparative Example 3

A rosin-modified phenolic resin was prepared as in Example 1, except that the amount of Indonesian gum rosin (containing 8% of dihydroagathic acid) was changed to 960 parts and that 40 parts of dihydroagathic acid was further added (the rosin mixture as the component (a) contains 12% of dihydroagathic acid). An insoluble material was produced in the resulting rosin-modified phenolic resin.

### Comparative Example 4

A rosin-modified phenolic resin was prepared as in Comparative Example 1, except that 20 parts of maleic anhydride was further added (the component (a) contains 0% of dihydroagathic acid). The resulting rosin-modified phenolic resin had an acid value of 22.1 mgKOH/g, a softening point of 177°C, and a weight average molecular weight of 104,000.

The physical properties of the resins obtained in the examples and the comparative examples are shown in Table 1.

**Table 1**

| | Content (%) of dihydroagathic acid in the component (a) | Other components | Acid value | Softening point (°C) | Weight average molecular weight |
|---|---|---|---|---|---|
| Example 1 | 8 | - | 22.6 | 176 | 107,000 |
| Example 2 | 4 | - | 20.2 | 176 | 95,000 |
| Example 3 | 0.5 | - | 19.8 | 175 | 87,000 |
| Example 4 | 3 | - | 20.8 | 177 | 101,000 |
| Example 5 | 10 | - | 23.3 | 178 | 139,000 |
| Example 6 | 4 | - | 21.8 | 181 | 47,000 |
| Example 7 | 4 | - | 21.5 | 181 | 51,000 |
| Example 8 | 4 | - | 19.4 | 178 | 299,000 |
| Example 9 | 4 | - | 17.1 | 178 | 305,000 |
| Comparative Example 1 | 0 | - | 19.5 | 168 | 48,000 |
| Comparative Example 2 | 0,3 | - | 20.0 | 175 | 79,000 |
| Comparative Example 3 | 12 | - | Insoluble material was produced in the resin. | | |
| Comparative Example 4 | 0 | Maleic anhydride | 22.1 | | 177 104,000 |

### Preparation of Varnishes

At 200°C, 45.0 parts of the resin obtained in each of the examples and the comparative examples, 10.0 parts of linseed oil, and 44.3 parts of AF Solvent No. 7 (nonaromatic petroleum solvent, manufactured by Nippon Oil Corporation) were mixed and dissolved for 30 minutes. Subsequently, after the mixture was cooled to 80°C, 0.7 parts of aluminum dipropoxide monoacetylacetate (Chelope EP-2 (trade name), manufactured by Hope Chemical Co., LTD) was added, and the mixture was heated to 200°C and allowed to undergo gelation for 1 hour, so that a gel varnish was obtained. The gel varnish produced with the resin of Example 9 had strong elasticity and was difficult to remove from the reaction vessel.

### Preparation of Printing Ink Compositions

Printing ink compositions were each prepared with the gel vanish of each of the examples and the comparative examples by kneading the components in the amounts shown below in a three roll mill.
Phthalocyanine blue (cyan pigment) 18 parts by weight
Gel varnish (described above) 62-70 parts by weight
AF Solvent No. 7 (Nippon Oil Corporation)12-20 parts by weight
Based on the above formulation, the preparation was appropriately performed so that the tack value measured with an inkometer at 30°C and 400 rpm could be 6.5±0.5 and that the flow value (diameter value) measured with a spread meter at 25°C could be 38.0±1.0.

### Printing Ink Performance Tests

The performance of each printing ink composition prepared with the gel varnish was evaluated by the tests described below. The results are shown in Table 2.

### Gloss

Using an RI tester (manufactured by Ishikawajima Industrial Machinery Co., Ltd.), 0.4 ml of the ink composition was spread on an art paper sheet. The spread ink was subjected to humidity control at 23°C and 50%R.H. for 24 hours and then measured for 60°-60° reflectance with a glossmeter.

### Misting

After 2.6 ml of the ink composition was spread on an inkometer (manufactured by Toyo Seiki Seisaku-Sho, Ltd.), the spread ink was rotated at a roll temperature of 30°C and 400 rpm for 1 minute and further rotated at 1,800 rpm for 2 minutes. The degree of scattering of the ink on a white paper sheet placed immediately below the roll was evaluated on a scale of 1 to 5. Concerning misting, the larger value indicates the smaller amount of mist and the better result.

### Drying Properties

Using an RI tester (manufactured by Ishikawajima Industrial Machinery Co., Ltd.), 0.4 ml of the ink composition was spread on an art paper sheet. The spread ink was then exposed to a 160°C atmosphere for 2 seconds, 4 seconds, and 6 seconds, respectively, and a state where no stickiness was felt by finger touch was determined to be dry. The evaluation was performed on a scale of 1 to 5, in which the smaller value indicates the better drying properties.

### Emulsification Rate

After 3.9 ml of the ink composition was spread on a dynamic emulsification tester (manufactured by Nippon Rheology Equipment Inc.), pure water was supplied thereto at a rate of 5 ml/minute and at a roll temperature of 30°C and 200 rpm, when the content of water in the spread ink was measured with an infrared moisture meter.

**Table 2**

| | Ink performances | | | |
|---|---|---|---|---|
| | Gloss | Misting | Drying properties | Emulsification rate (%) |
| Example 1 | 45 | 5 | 4 | 42 |
| Example 2 | 46 | 4 | 4 | 41 |
| Example 3 | 47 | 4 | 4 | 40 |
| Example 4 | 46 | 4 | 4 | 42 |
| Example 5 | 45 | 5 | 5 | 42 |
| Example 6 | 47 | 3 | 4 | 43 |
| Example 7 | 47 | 4 | 4 | 42 |
| Example 8 | 45 | 5 | 5 | 40 |
| Example 9 | 45 | 5 | 5 | 39 |
| Comparative Example 1 | 47 | 2 | 3 | 40 |
| Comparative Example 2 | 47 | 2 | 4 | 40 |
| Comparative Example 4 | 41 | 5 | 5 | 50 |

The results in Table 2 show that the printing ink compositions each prepared with a rosin-modified phenolic resin according to the invention (Examples 1 to 9), which has a dihydroagathic acid content in the specified range according to the invention, have high anti-misting properties without being degraded in gloss as compared with the printing ink composition prepared with a rosin-modified phenolic resin whose dihydroagathic acid content does not fall within the specified range (Comparative Example 1 or 2). The printing ink composition (Comparative Example 4) prepared with a rosin-modified phenolic resin that was produced without dihydroagathic acid by reaction with a dibasic acid so as to have a high molecular weight had low gloss, although it had good anti-misting properties. The printing ink compositions each prepared with a rosin-modified phenolic resin having a weight average molecular weight within the preferred specified range according to the invention have better anti-misting properties than the printing ink composition (Example 6) prepared with a rosin-modified phenolic resin whose weight average molecular weight was less than the preferred specified range, and also have better handleability during the gel varnish production than the printing ink composition (Example 9) prepared with a rosin-modified phenolic resin whose weight average molecular weight was more than the preferred specified range.

## Claims

1. A rosin-modified phenolic resin, comprising a product obtained by reaction of (a) a rosin material containing 0.4 to 10% of dihydroagathic acid, (b) a condensate of a phenolic compound and formaldehyde, and (c) a polyol.

2. The rosin-modified phenolic resin according to claim 1, which has a weight average molecular weight of 50,000 to 300,000.

3. The rosin-modified phenolic resin according to claim 1 or 2, wherein based on 100% by weight of the total of the components (a), (b), and (c) used, the amount of the component (a) used is from 41 to 88% by weight, the amount of the component (b) used is from 9 to 50% by weight, and the amount of the component (c) used is from 3 to 9% by weight.

4. A method for producing a rosin-modified phenolic resin, comprising allowing (a) a rosin material containing 0.4 to 10% of dihydroagathic acid, (b) a condensate of a phenolic compound and formaldehyde, and (c) a polyol to react together.

5. The method according to claim 4, wherein the rosin-modified phenolic resin has a weight average molecular weight of 50,000 to 300,000.

6. The method according to claim 4 or 5, wherein based on 100% by weight of the total of the components (a), (b), and (c) used, the amount of the component (a) used is from 41 to 88% by weight, the amount of the component (b) used is from 9 to 50% by weight, and the amount of the component (c) used is from 3 to 9% by weight.

7. A printing ink composition comprising the rosin-modified phenolic resin according to any one of claims 1 to 3.
